Europäisches Patentamt

European Patent Office

Office européen des brevets

(11) Veröffentlichungsnummer : **0 158 086**
**B1**

(12) **EUROPÄISCHE PATENTSCHRIFT**

(45) Veröffentlichungstag der Patentschrift :
**23.12.87**

(21) Anmeldenummer : **85102128.7**

(22) Anmeldetag : **27.02.85**

(51) Int. Cl.⁴ : **C 09 J 3/16, C 08 G 18/08,**
**C 08 G 18/66, B 32 B 7/12**

(54) **Schmelzklebstoff und seine Verwendung zur Herstellung von Verbundstrukturen.**

(30) Priorität : **10.03.84 DE 3409183**

(43) Veröffentlichungstag der Anmeldung :
**16.10.85 Patentblatt 85/42**

(45) Bekanntmachung des Hinweises auf die Patenterteilung : **23.12.87 Patentblatt 87/52**

(84) Benannte Vertragsstaaten :
**DE FR GB IT SE**

(56) Entgegenhaltungen :
**EP-A- 0 000 548**
**EP-A- 0 003 521**
**FR-A- 2 099 457**

(73) Patentinhaber : **BAYER AG**
**Konzernverwaltung RP Patentabteilung**
**D-5090 Leverkusen 1 Bayerwerk (DE)**

**Beiersdorf Aktiengesellschaft**
**Unnastrasse 48**
**D-2000 Hamburg 20 (DE)**

(72) Erfinder : **Kramer, Jürgen, Dr.**
**Stieglitzweg 30**
**D-2107 Rosengarten 8 (DE)** ·
Erfinder : **Müller-Albrecht, Horst, Dr.**
**Roggendorfstrasse 59**
**D-5000 Köln 80 (DE)**

## Beschreibung

Die Erfindung betrifft neue, lösungsmittelfreie Schmelzklebstoffe auf Basis von Polyesterpolyurethanen und ihre Verwendung zur Herstellung von Verbundstrukturen.

Bei der Herstellung von Verbundstrukturen wie Kaschierteilen für den Kraftfahrzeuginnenausbau werden lösungsmittelhaltige, meist 2-komponentige Klebstoffsysteme beispielsweise auf Basis von Polyurethanen verwendet. Lösungsmittelhaltige Systeme haben jedoch zahlreiche unerwünschte Eigenschaften. Sie sind toxisch, kompliziert in der Handhabung, unwirtschaftlich und feuergefährlich. So verursachen sie zusätzliche Kosten für Auftragsaggregate, Absaugeinrichtungen, Lösungsmittelrückgewinnungsvorrichtungen, Abgasreinigungsanlagen, Explosionsschutzeinrichtungen, Feuerschutzanlagen usw. Weitere Kosten werden durch die zum Entfernen und Rückgewinnen des Lösungsmittels erforderliche Energie, durch höhere Dosierungen bezogen auf Feststoffanteile, durch Maßnahmen zur Vermeidung von toxischen Arbeitsplatzkonzentrationen und durch das Erfordernis höherer Risikoversicherungen bewirkt. Die Toxizität beruht darauf, daß bereits die Lösungsmittel ein erhebliches toxisches Potential haben. In noch weit höherem Maße sind jedoch die reaktiven Komponenten toxisch (MAK-Wert < 0,02 ppm). Die Feuergefährlichkeit dieser Klebstoffsysteme kommt dadurch zum Ausdruck, daß sie im allgemeinen der Gefahrenklasse A I entsprechen, d. h. sie haben einen Flammpunkt von < 21 °C. Alle diese Nachteile führen dazu, daß diese Klebstoffsysteme schwierig zu handhaben sind. Begrenzte Topfzeit, exakte Dosierung der Komponenten, Ausschluß von Feuchtigkeit usw. sind nur einige Stichworte, die zusätzlich zu den genannten Problemen bei der Verarbeitung zu berücksichtigen sind.

Alle obengenannten Nachteile hat man bisher in Kauf nehmen müssen, da kein anderes Klebstoffsystem gefunden wurde, das in der Lage war, die hohen Anforderungen zu erfüllen. Diese Anforderungen sind vor allem :

Hohe Kohäsion,

höchste Wärmebeständigkeit,

Migrationsbeständigkeit gegenüber W-PVC-Verklebung,

Tiefziehfähigkeit,

hohe Adhäsion zu vielfältigsten Materialien und einfache Verarbeitung.

Angesichts der oben geschilderten Nachteile bestehender Klebstoffsysteme und angesichts der obigen hohen Anforderungen liegt der Erfindung die Aufgabe zugrunde, einen lösungsmittelfreien Klebstoff vorzuschlagen, der folgenden Anforderungen genügt :

Aktivierbarkeit unterhalb der Schädigungsgrenze der zu verklebenden Substrate (meist ≤ 130 °C)

hohe Wärmestandfestigkeit bei Zugbeanspruchung (je nach Einsatzfall 24 Stunden bei 80, 90 oder 120 °C).

Beständigkeit gegen Weichmachermigration, hohes Haftungsniveau, Tiefziehfähigkeit und befriedigende Haftung zu Metalloberflächen.

Diese Aufgabe konnte durch die Bereitstellung der nachstehend näher beschriebenen erfindungsgemäßen Schmelzklebstoffe gelöst werden.

Gegenstand der Erfindung ist ein lösungsmittelfreier Schmelzklebstoff auf Basis von Polyesterpolyurethanen, dadurch gekennzeichnet, daß die Polyesterpolyurethane

(i) bei 20 °C in Methylethylketon nicht zu einer 15 %-igen Lösung gelöst werden können,

(ii) durch Umsetzung von a) organischen Diisocyanaten mit b) einer Mischung aus Polyesterdiolen, 1 bis 4 Mol pro Mol Polyesterdiol an niedermolekularen, aliphatischen Diolen als Kettenverlängerungsmittel, 0,025 bis 0,3 Mol pro Mol Polyesterdiol an Dimethylolpropionsäure und 0,025 bis 0,2 Mol pro Mol Polyesterdiol an Sulfonatdiolen unter Einhaltung eines NCO/OH-Äquivalentverhältnisses von 0,9 : 1 bis 1,05 : 1 hergestellt worden sind, wobei bei Verwendung von niedrigen Mengen an niedermolekularen Diolen innerhalb des genannten Bereichs keine Diolgemische verwendet werden,

(iii) von 0,01 bis 1 Gew.-% an eingebauten Carboxylgruppen

(iv) von 0,1 bis 10 Milliäquivalenten pro 100 g Feststoff an eingebauten Sulfonatgruppen und

(v) von 4 bis 20 Gew.-% an Urethangruppen enthalten.

Gegenstand der Erfindung ist auch die Verwendung dieser Schmelzklebstoffe zur Herstellung von Verbundstrukturen.

Wenngleich der erfindungsgemäße Schmelzklebstoff selbstverständlich für die verschiedensten Zwecke und auf den verschiedensten technischen Gebieten eingesetzt werden kann, wird im folgenden insbesondere auf die Herstellung von Verbundstrukturen wie Kaschierteilen für den Kraftfahrzeuginnenausbau bezug genommen, da dies ein bevorzugtes Einsatzgebiet des erfindungsgemäßen Schmelzklebstoffes ist und die durch ihn erzielbaren Vorteile besonders deutlich werden läßt.

Die wirtschaftlichen, physiologischen und sicherheitstechnischen Vorteile von Schmelz- bzw. Heißsiegelklebstoffen sind dem Fachmann geläufig und in der Literatur ausführlich beschrieben. Dennoch stand bisher kein derartiges Klebstoffsystem für den Kfz-Innenausbau zur Verfügung, das in der Lage war, die oben geschilderten hohen Anforderungen zu erfüllen. Überraschenderweise erfüllt der erfindungsgemäße Schmelzklebstoff alle diese Anforderungen, so daß die Nachteile des bisherigen Klebstoffsysteme (s. o.) unter Ausnutzung der bekannten Vorteile von Schmelzklebstoffen vermieden werden. In nahezu idealer Weise werden die Vorteile von Schmelzklebstoffen in einer bevorzugten Ausführungsform der Erfindung dadurch ergänzt, daß der erfindungsgemäße Schmelzklebstoff in Form einer Folie bzw. einer « in situ »-Beschichtung vorliegt, da sich dadurch die Handhabung bei der Herstellung von Laminaten bzw. Verbundstrukturen stark vereinfacht. Insbesondere die bevorzugte Ausführungsform des erfindungsgemäßen Schmelzklebstoffes in Form einer « in situ »-Beschichtung bzw. Folie auf einem Substrat bringt den großen Vorteil, daß bereits eine Substratseite des herzustellenden Laminats bzw. der herzustellenden Verbundstruktur optimal benetzt ist und im späteren Kaschiervorgang Prozeßzeit, Schmelzenergie und Preßdruck im wesentlich auf die Aktivierung des Klebstoffes und auf die Benetzung des anderen mit dem ersten Substrat zu verbindenden Substrats bemessen werden können. Ein weiterer wichtiger Vorteil ist, daß der Verarbeiter keine Lagerbevorratung und andere separate Arbeitsgänge durchführen muß. Wie sich aus der folgenden Beschreibung ergibt, kann der in Form einer « in situ »-Beschichtung auf einem Substrat wie einer W-PVC-Schaumstoffolie (W-PVC-Schaumstoff = Weichpolyvinylchloridschaumstoff) vorliegende Schmelzklebstoff direkt in der Kaschieranlage verarbeitet werden.

Die Hauptkomponente des erfindungsgemäßen Schmelzklebstoffs basiert auf Carboxyl- und Sulfonatgruppen aufweisenden Polyesterpolyurethanen, die im Unterschied zu den Klebstoffen gemäß EP-PS 548 (US-PS 4 240 861) in Methylethylketon unlöslich sind. Dies bedeutet konkret, daß beispielsweise die erfindungswesentlichen, Carboxyl- und Sulfonatgruppen aufweisenden Polyesterpolyurethane bei 20 °C in Methylethylketon nicht zu einer 15 %igen Lösung gelöst werden können. Das genannte Lösungsmittel führt vielmehr lediglich zu einem Anquellen des unlöslichen Polyurethans.

Die erfindungswesentliche Komponente, d. h. das Carboxyl und Sulfonatgruppen aufweisende Polyesterpolyurethan kann durch Umsetzung von organischen Diisocyanaten mit vorzugsweise difunktionellen, alkoholische Hydroxylgruppen aufweisenden Polyesterpolyolen und niedermolekularen Diolen als Kettenverlängerungsmittel unter Einhaltung eines NCO/OH-Äquivalentverhältnisses von 0,9 :1 bis 1,05 :1 hergestellt werden, wobei durch Mitverwendung geeigneter Aufbaukomponenten gleichzeitig ein Einbau von Carboxyl- und Sulfonatgruppen sichergestellt wird. Es ist bevorzugt, daß die Polyesterpolyurethane 0,01 bis 1, vorzugsweise 0,02 bis 0,6 Gew.-% eingebaute Carboxylgruppen, 0,1 bis 10, vorzugsweise 0,5 bis 5 Milliäquivalente eingebaute Sulfonatgruppen pro 100 g Feststoff und 4 bis 20, vorzugsweise 6 bis 16 Gew.-% Urethangruppen -NH-CO-O- enthalten. Besonders bevorzugt werden bei der Herstellung der Carboxyl- und Sulfonatgruppen aufweisenden Polyesterpolyurethane pro Mol Polyesterpolyol 1 bis 4 Mol Diol-Kettenverlängerungsmittel der nachstehend näher beschriebenen Art, 0,025 bis 0,3 Mol Dimethylolpropionsäure und 0,025 bis 0,2 Mol Sulfonatdiol der nachstehend näher beschriebenen Art eingesetzt, wobei darauf zu achten ist, daß bei Verwendung von niedrigen Mengen an Kettenverlängerungsmitteln innerhalb des genannten Bereichs keine Kettenverlängerungsmittel-Gemische verwendet werden, um die erfindungswesentliche Bedingung der Unlöslichkeit der Polyurethane in Methylethylketon zu gewährleisten. Bei der Herstellung der Polyesterpolyurethane werden in allgemeinen Gemische der Hydroxylverbindungen mit den Diisocyanaten im obengenannten Äquivalentverhältnis miteinander zur Umsetzung gebracht.

Die Herstellung der die Basis des erfindungsgemäßen Schmelzklebstoffes bildenden Polyesterpolyurethane kann nach beliebigen bekannten Verfahren zur Herstellung von segmentierten Polyesterpolyurethanen erfolgen (s. a. a. O. Seite 19ff). Dies gilt sowohl für die erfindungsgemäß modifizierten Polyesterpolyurethane als auch für die nachstehend beschriebenen, gegebenenfalls zusammen mit den erfindungswesentlichen Polyesterpolyurethanen in den Schmelzklebstoffen vorliegenden, bekannten, nicht modifizierten Polyesterpolyurethane. Unter Einhaltung der obengenannten Äquivalentverhältnisse zwischen Isocyanatgruppen und Hydroxylgruppen und vorzugsweise auch unter Einhaltung der Mengenverhältnisse der Ausgangsmaterialien zur Erzielung der oben angegebenen Mengen eingebauter Carboxylgruppen, eingebauter Sulfonatgruppen und eingebauter Urethangruppen erfolgt die Herstellung vorzugsweise innerhalb des Temperaturbereichs von 50 bis 220 °C, wobei ein Temperaturbereich von 80 bis 200 °C besonders bevorzugt ist. Die Herstellung der Polyesterpolyurethane aus den unten erläuterten Ausgangsmaterialien kann beispielsweise einstufig in der Schmelze durchgeführt werden.

Als Polyesterpolyole können die zur Herstellung von Polyesterpolyurethanen bekannten Polyesterpolyole verwendet werden. Bevorzugt sind jedoch difunktionelle, alkoholische Hydroxylgruppen aufweisende Polyesterdiole. Geeignet sind Polyesterdiole mit einem durchschnittlichen Molekulargewicht von 800 bis 5000 und vorzugsweise 2000 bis 4000 aus (i) Dicarbonsäuren mit mindestens 6 Kohlenstoffatomen wie Adipinsäure, Pimelinsäure, Korksäure, Azelainsäure und/oder Sebacinsäure, vorzugsweise Adipinsäure als alleinige Säurekomponente und (ii) Alkandiolen mit vorzugsweise mindestens 4 Kohlenstoffatomen wie z. B. 1,4-Dihydroxybutan, 1,5-Dihydroxypentan und/oder 1,6-Dihydroxyhexan. Polykondensate von ω-Hydroxyalkanmonocarbonsäuren bzw. die Polymerisate ihrer Lactone sind ebenfalle geeignet, jedoch weniger bevorzugt. Derartige Polyesterdiole sind im Handel erhältlich oder können in einfacher Weise nach bekannten Verfahren hergestellt werden (s. a. a. O. Seite 57). Die angegebenen Molekulargewichte werden aus dem experimentell in herkömmlicher Weise bestimmten Hydroxylgruppengehalt errechnet.

Erfindungsgemäß als Kettenverlängerungsmittel geeignete niedermolekulare Diole sind insbesondere aliphatische Diole mit einem durchschnittlichen Molekulargewicht von 62 bis 400 bzw. Gemische derartiger Diole. Die Verwendung von Gemischen unterschiedlicher Diole ist jedoch weniger bevorzugt, da dies die Löslichkeit der Polyurethane in Methylethylketon gegebenenfalls gewährleisten würde. Beispiele derartiger Diole sind Ethylenglykol, 1,3-Dihydroxypropan, 1,4-Dihydroxybutan, 1,5-Dihydroxypentan oder 1,6-Dihydroxyhexan. 1,4-Dihydroxybutan und 1,6-Dihydroxyhexan bzw. ihre Gemische stellen bevorzugte Kettenverlängerungsmittel dar. Auch diese Verbindungen sind dem Fachmann geläufig und im Handel erhältlich.

Die zur Polyurethanherstellung geeigneten organischen Diisocyanate sind dem Fachmann ebenfalls geläufig, in der Literatur ausführlich beschrieben und im Handel erhältlich bzw. in einfacher Weise nach bekannten Verfahren herstellbar. Erfindungsgemäß sind aromatische Diisocyanate bevorzugt. So werden beispielsweise 4,4'-Diisocyanatodiphenylmethan und 2,4- und/oder 2,6-Diisocyanatotoluol bevorzugt eingesetzt. Es können aber auch andere organische Diisocyanate wie beispielsweise 1,6-Diisocyanatohexan verwendet werden.

Zur erfindungsgemäßen Modifikation der aus den zuvor genannten, an sich bekannten und in herkömmlicher Weise hergestellten Polyesterpolyurethane dienen Carboxylgruppen aufweisende Aufbaukomponenten und Sulfonatgruppen aufweisende Aufbaukomponenten der nachstehend beispielhaft genannten Art.

Für den Einbau von Carboxylgruppen in die erfindungsgemäßmodifizierten Polyesterpolyurethane eignen sich insbesondere Di- und Trihydroxycarbonsäuren. Bevorzugtes Beispiel hierfür ist die Dimethylolpropionsäure.

Zum Einbau von Sulfonatgruppen in die erfindungsgemäß modifizierten Polyesterpolyurethane eignen sich vorzugsweise organische Sulfonatdiole wie beispielsweise die Anlagerungsprodukte von Natrium- oder Kaliumbisulfit an ungesättigte Diole wie 1,4-Dihydroxybuten bzw. deren Alkoxylierungsprodukte, vorzugsweise Propoxylierungsprodukte des durchschnittlichen Molekulargewichtsbereiches 300 bis 600. Die Molekulargewichte sind auf Basis des experimentell in herkömmlicher Weise bestimmbaren Hydroxylgruppengehalts errechenbar. Bezüglich der geeigneten Sulfonatdiole und deren Herstellung sei im übrigen auf die DE-B 24 46 440 verwiesen.

Der Vollständigkeit halber sei darauf hingewiesen, daß bei der Herstellung der erfindungsgemäß modifizierten Polyesterpolyurethane und natürlich auch der nicht modifizierten Polyesterpolyurethane selbstverständlich auch Mischungen der als Ausgangsmaterialien geeigneten Verbindungen eingesetzt werden können, d. h. es können zwei oder mehrere geeignete Polyesterdiole, zwei oder mehrere geeignete Kettenverlängerungsmittel, zwei oder mehrere geeignete organische Diisocyanate, zwei oder mehrere Carboxylgruppen aufweisende Aufbaukomponenten und zwei oder mehrere Sulfonatgruppen aufweisende Aufbaukomponenten eingesetzt werden. Es muß jedoch auch hier darauf hingewiesen werden, daß die Verwendung von Gemischen der einzelnen Aufbaukomponenten zu einer bezüglich der erfindungswesentlichen Polyesterpolyurethane mit eingebauten Carboxyl- und Sulfonatgruppen unerwünschten Erhöhung der Löslichkeit in Methylethylketon führen kann. Darüber hinaus kann der erfindungsgemäße Schmelzklebstoff selbstverständlich noch konventionelle Zusätze wie Füllstoffe, Flammschutzmittel, Farbmittel, Entwässerungsmittel (z. B. Isocyanate), Antistatika (z. B. Leitfähigkeitsruß), Hilfsmittel zur Verbesserung der HF-Aktivierung, weichmachende Komponenten (wenn beispielsweise eine Flammkaschierung vorgesehen ist) und Gleit- und Schmiermittel bzw. Antibackmittel (die unten beschriebenen Granulate werden beispielsweise in der Regel mit Talkum gepudert) usw. enthalten (s. außerdem a. a. O., Seiten 92 bis 112 und die dort genannte Literatur). Der mengenmäßige und zeitpunktmäßige Einsatz dieser üblichen Zusätze ist dem Fachmann geläufig und bedarf keiner weiteren Erläuterung.

Wie bereits oben erwähnt, erfolgt die Herstellung der erfindungswesentlichen modifizierten Polyesterpolyurethane und der in den Schmelzklebstoffen gegebenenfalls zusammen mit diesen vorliegenden, nicht modifizierten, an sich bekannten Polyesterpolyurethane in völlig gleicher Weise mit dem Unterschied, daß bei der Herstellung der erfindungsgemäß modifizierten Polyesterpolyurethane Carboxylgruppen aufweisende Aufbaukomponenten und Sulfonatgruppen aufweisende Aufbaukomponenten mitverwendet werden.

Bei der Herstellung der nicht modifizierten Polyesterpolyurethane werden vorzugsweise pro Mol Polyesterdiol 0,2 bis 1,5, vorzugsweise 0,6 bis 1,0 Mol Kettenverlängerungsmittel eingesetzt.

In einer bevorzugten Ausführungsform enthält der erfindungsgemäße Schmelzklebstoff neben den erfindungsgemäß modifizierten Polyesterpolyurethanen zusätzlich nicht modifizierte, an sich bekannte Polyesterpolyurethane, die sich von den modifizierten Polyesterpolyurethanen im wesentlichen durch das Fehlen der eingebauten Carboxyl- und Sulfonatgruppen unterscheiden, ansonsten jedoch im wesentlichen auf den bereits obengenannten Carboxyl- und Sulfonatgruppenfreien Aufbaukomponenten basieren. Bezüglich der geeigneten, bekannten, nicht modifizierten Polyesterpolyurethane sei im übrigen z. B. auf die DE-B 1 930 336 und die DE-B 2 161 340 sowie die GB-A 970 379 verwiesen. Das Gewichtsverhältnis von erfindungsgemäß modifizierten Polyesterpolyurethanen zu nicht modifizierten Polyesterpolyurethanen beträgt vorzugsweise 10 :1 bis 1 :10 und insbesondere 4 :1 bis 1 :4. Die erfindungsgemäß den modifizierten Polyesterpolyurethanen zugesetzten nicht modifizierten, handelsüblichen Polyesterpolyurethane besitzen eine hohe Lösungsviskosität in MEK, eine starke Kristallisationsneigung und eine verhältnismäßig geringe Thermoplastizität. So beträgt die Lösungsviskosität eines derartigen erfolgreich verwendeten Polyesterpolyurethans beispielsweise 1 bis 1,5 Pas (15 % in MEK, Brookfield, LVF-Viskosimeter, Spindel 3, 60 upm, Raumtemperatur). Die modifizierten Polyesterpolyurethane sind demgegenüber in MEK nicht löslich und besitzen einen höheren Schmelzpunkt und einen höheren Anteil von Hartsegmenten (siehe Beispiele).

Zur Unterstützung der physikalischen Vernetzung der die Basis des erfindungsgemäßen Schmelzklebstoffs bildenden Polyesterpolyurethane (sowohl modifiziert als auch nicht modifiziert) können zusätzlich di- und/oder trifunktionelle Isocyanate als chemische Vernetzungsmittel, insbesondere in einer Menge von 0,1 bis 5 Gew.-% zugesetzt werden. Diese Isocyanate können auch in verkappter Form (z. B. verkappt mit Nonylphenol) vorliegen. In Betracht kommen beispielsweise Diphenylmethan-4,4'-diisocyanat und Thiophosphorsäure-tris-(p-isocyanatophenylester) sowie dimeres Toluylendiisocyanat (verkapptes Isocyanat durch Dimerbildung des 2,4-Isomeren von TDI). Die Mitverwendung derartiger Vernetzungsmittel ist jedoch wegen der Gefahr einer vorzeitigen Vernetzung der Klebstoffe bei der Herstellung der erfindungsgemäßen Klebefolien weniger bevorzugt.

Bei der oben beschriebenen einstufigen Herstellung in der Schmelze fallen die erfindungsgemäß modifizierten und in gleicher Weise auch die nicht modifizierten Polyesterpolyurethane nach dem Abkühlen als erstarrte Schmelze an. Diese wird in üblicher Weise granuliert. Das oder die Granulate, die gegebenenfalls unter Zusatz des Vernetzungsmittels und der üblichen Zusätze, soweit diese nicht schon in den Granulaten enthalten sind, werden zu Folien, « in situ »-Beschichtungen, Streifen, Bahnen, Platten, Bändern usw. extrudiert. Besonders bevorzugt liegt der erfindungsgemäße Schmelzklebstoff in Form einer Folie (Klebefolie) oder einer « in situ »-Beschichtung bzw. -Folie auf einem Substrat vor. Das Extrudieren der den erfindungsgemäßen Schmelzklebstoff bildenden Ausgangsmaterialien kann in üblicher Weise erfolgen. Auch hierzu sei auf die einschlägige Literatur (z. B. Becker/Braun « Kunststoff-Handbuch », Band 7, 2. Auflage, Polyurethane, Seite 433 ff.) verwiesen. Zur Herstellung des erfindungsgemäßen Schmelzklebstoffs in Folienform hat sich beispielsweise das bekannte Chill-Roll-Verfahren als geeignet erwiesen (siehe z. B. Saechtling « Kunststoff Taschenbuch », 21. Ausgabe, 1979, Seiten 130-160, insbesondere Seite 156). Gegebenenfalls kann man bei der Herstellung des erfindungsgemäßen Schmelzklebstoffs in Folienform eine Mitläuferfolie aus Polyethylen als Trennfolie vor den Kühlwalzen oder bei der Aufwicklung zulaufen lassen.

Anstelle der Herstellung des erfindungsgemäßen Schmelzklebstoffs in Form einer Folie ist es in vielen Fällen noch besser, den erfindungsgemäßen Schmelzklebstoff in Form einer « in situ »-Beschichtung auf einem Substrat herzustellen, wobei das Substrat eine der Laminatschichten der später herzustellenden Verbundstruktur ist. Bei dieser Ausführungsform werden die Ausgangsmaterialien direkt auf eine Seite des Substrats extrudiert. Diese Technik ist dem Fachmann ebenfalls geläufig, so daß nähere Erläuterungen nicht erforderlich sind.

Als geeignete Extrudierverfahren für die Herstellung des erfindungsgemäßen Schmelzstoffs in Form einer Folie oder einer « in situ »-Beschichtung seien beispielsweise die Blasfolien- und die Breitschlitzdüsenextrusion genannt. Bei Anwendung des Chill-Roll-Verfahrens kann das Substrat als Mitläuferfolie eingesetzt werden, um die gewünschte « in situ »-Beschichtung zu erhalten.

Der erfindungsgemäße Schmelzkleber kann natürlich außer in den oben bevorzugten Ausführungsformen auch in Pulverform verwendet werden. Die Anwendung erfolgt dann in der Weise, daß der pulverförmige Schmelzkleber auf ein Substrat, beispielsweise ein textiles Substrat, aufgestreut wird und das so behandelte Substrat durch einen Infrarotkanal geführt wird, so daß der pulverförmige Schmelzkleber leicht auf dem Substrat ansintert. Das auf diese Weise mit dem erfindungsgemäßen Schmelzkleber versehene Substrat kann dann zur Herstellung von Verbundstrukturen verwendet werden.

Wie bereits oben erwähnt, ist der erfindungsgemäße Schmelzklebstoff neben vielen anderen Anwendungsmöglichkeiten besonders vorteilhaft bei der Herstellung von Verbundstrukturen und hier insbesondere von Kaschierteilen für den Kraftfahrzeuginnenausbau. Dabei kann der erfindungsgemäße Schmelzklebstoff als vakuumtiefziehfähige Folie oder « in situ »-Beschichtung zur Herstellung von mit W-PVC-(Schaum)folien-, Leder-, Textil- oder ähnlichen Substraten kaschierten Formteilen wie z. B. Dachhimmeln, Seitenverkleidungselementen, Schalttafelelementen, Handschuhkastenteilen, Beifahrerund Armaturentafelteilen usw. verwendet werden. Das zur Herstellung dieser Formteile angewendete Vakuumtiefziehverfahren, Tiefziehpressen oder Vakuumtiefziehpressen ist bekannt und wird in der Praxis in einer großen Vielfalt einschließlich der verschiedensten Variationen durchgeführt (siehe z. B. Saechtling « Kunststoff Taschenbuch », 21. Auflage, 1979, Seiten 140 bis 184, insbesondere Seite 168 und Wittfoht, « Kunststofftechnisches Wörterbuch » Teil 3, 1978, Seite 167 ff.). Weiterhin kann der erfindungsgemäße Schmelzkleber aufgrund seiner guten Haftung auf metallischen Untergründen zur direkten Aufbringung von Folien, Seitenverkleidungen usw. verwendet werden. Besonders geeignet ist der erfindungsgemäße Schmelzklebstoff für diese Anwendungen natürlich dann, wenn er bereits als « in situ »-Beschichtung vorliegt.

Die Aktivierung des erfindungsgemäßen Schmelzklebstoffs kann neben den herkömmlichen Hitzebeaufschlagungsverfahren (z. B. Infrarotbestrahlung, Kontaktwärme usw.) auch durch Erwärmung im hochfrequenten Wechselfeld erfolgen.

Beispiel 1

Herstellung von nicht modifizierten Polyesterpolyurethanen :

Bei 100 °C wurde ein vorab hergestelltes Gemisch aus 1 Mol eines Polyesterdiols des Molekulargewichts 2250 aus Adipinsäure und 1,6-Dihydroxyhexan, 0,45 Mol 1,4-Dihydroxybutan und 0,45 Mol 1,6-Dihydroxyhexan mit 1,88 Mol 4,4'-Diisocyanatodiphenylmethan verrührt. Das so erhaltene homogene Gemisch wurde dann in einen Metallkasten ausgegossen und während 16 Stunden bei 140 °C gehalten. Anschließend wurde das entstandene Polyesterpolyurethan nach Abkühlen granuliert.
Herstellung von erfindungsgemäß modifizierten Polyesterpolyurethanen :

Beispiel 2

Wie in Beispiel 1 beschrieben wurden 1 Mol des in Beispiel 1 genannten Polyesterdiols, 3 Mol 1,4-Dihydroxybutan, 1 Mol 1,6-Dihydroxyhexan, 0,3 Mol Dimethylolpropionsäure und 0,2 Mol des propoxylierten Addukts von Natriumbisulfit an 1,4-Dihydroxybuten des Molekulargewichts 400 zusammen mit 5,45 Mol 4,4'-Diisocyanatodiphenylmethan zu einem Polyesterurethan umgesetzt und nach Abkühlen granuliert. Das resultierende Polyesterpolyurethan wies 15,6 Gew.-% Urethangruppen —NH—CO—O—, 0,32 Gew.% Carboxylgruppen und 4,8 Milliäquivalente pro 100 g Feststoffe an Sulfonatgruppen auf.

Beispiel 3

Entsprechend der Herstellungsvorschrift in Beispiel 1 wurden 1 Mol eines Polyesterdiols des Molekulargewichts 3000 aus Adipinsäure und 1,6-Hexandiol, 1 Mol 1,4-Dihydroxybutan, 0,025 Mol Dimethylolpropionsäure, 0,025 Mol des in Beispiel 2 beschriebenen Sulfonatdiols und 2,03 Mol 4,4'-Diisocyanatodiphenylmethan zu einem Polyesterpolyurethan umgesetzt und nach Abkühlen granuliert. Das erhaltene Polyesterpolyurethan wies einen Gehalt an Carboxylgruppen von 0,03 Gew.-% an Urethangruppen von 6,7 Gew.-% und an Sulfonatgruppen von 0,7 Milliäquivalenten pro 100 g Feststoff auf.

Beispiel 4

Herstellung eines erfindungsgemäßen Schmelzklebstoffes :
80 Gew.-Teile des Granulats gemäß Beispiel 1 und 20 Gew.Teile des Granulats gemäß Beispiel 2 wurden in einem Mischbehälter von Hand vorhomogenisiert und in einem Einschneckenextruder bei einem Temperaturbereich von 190 bis 220 °C über eine Breitschlitz-Auslaßdüse zu zu Folien verarbeitet. Es wurden Folien einer Dicke, von 50, 100 bzw. 150 μm hergestellt.

Extrudierdaten

| Schnecke : | 20 D |
| --- | --- |
| Durchmesser : | 100 mm |
| Kompression : | 1 : 3 |
| Motorleistung : | 34 kW, 72 A |

Vor dem Aufwickeln der entstehenden Folien wurden jeweils Mitläuferfolien aus Polyethylen zulaufen gelassen.
In der gleichen Weise wurde das in den Extruder gegebene Material direkt auf verschiedene Substrate extrudiert (siehe die folgenden Beispiele), die als Mitläuferfolien eingesetzt wurden.

Beispiel 5

Vakuumtiefziehkaschieren :

Kaschierte Formteile aus Trägerteilen aus Holzfaserpreßstoff, ABS/PVC, FC/ABS usw. wurden mit dem in Form einer « in situ »-Beschichtung auf einem Substrat vorliegenden Schmelzklebstoff kaschiert. Es wurden jeweils drei Parallelversuche mit Schichtdicken des Klebstoffs von 50, 100 bzw. 150 μm durchgeführt. Als Substrate dienten W-PVC-Schaumstoff bzw. W-PVC/ABS-Schaumstoff-Folien einer Dicke von ca. 3 mm. Zur Herstellung der kaschierten Formteile wurde ein Laborvakuumtiefziehgerät verwendet. Dazu wurde das Trägerteil auf eine Stützform gelegt. Die Folie wurde von der Beschichtungsseite mit Infrarotstrahlern auf > 130 °C erhitzt, ballonförmig aufgeblasen, über dem Trägerteil angeordnet und dann über das Trägerteil mittels Vakuum tiefgezogen. Bei nicht luftdurchlässigen Trägermaterialien wurden Bohrungen dergestalt angebracht, daß vor allem an Stellen großer geometrischer Änderungen von der Folie zum Formteil eine ausreichende Saugkraft angriff, so daß das Trägerteil vom Klebstoff gut benetzt werden konnte.
Es zeigte sich überraschend, daß die so hergestellten kaschierten Formteile alle Forderungen an die Klebefuge erfüllten, insbesondere gab es keine Ablösungen nach 24 Stunden Lagerung bei 90 °C im Wärmeschrank.
Diese Laborversuche wurden auf Technikums- und Produktionsanlagen wiederholt und führten zu den gleichen positiven Ergebnissen.

Beispiel 6

Tiefziehpreßkaschieren :

Der in Form einer « in situ »-Beschichtung gemäß Beispiel 4 hergestellte Schmelzklebstoff einer Dicke von ca. 50 μm, wobei als Substrat eine W-PVC-Schaumfolie einer Dicke von ca. 3 mm diente, wurde nachträglich mit einem Nadelkissen so behandelt, daß eine auf der gesamten Fläche durchbrochene Beschichtung entstand. Die so behandelte Folie wurde in einen Spannrahmen eingelegt und von der Klebeseite her mittels Infrarotbestrahlung ≥ 130 °C aufgeheizt. In einem zweiten Rahmen wurde eine Platte aus expandiertem Polystyrol (EPS-Schaum) auf ≤ 140 °C vorgewärmt. Die Teile wurden einer Tiefziehpresse zugeführt, so daß in einem Arbeitsgang ein Formteil auf Basis eines Trägers aus tiefgezogenem EPS-Schaum mit einer darauf kaschierten tiefgezogenen W-PVC-Schaumfolie entstand.
Es zeigte sich überraschend, daß die so hergestellten Formteile den Anforderungen, wie sie auch für vakuumtiefgezogene Formteile gelten, genügten, d. h. es kam insbesondere zu keinen Trennungen der Klebefuge bei 24 Stunden Lagerung der Teile bei 90 °C im Wärmeschrank.

**Patentansprüche**

1. Lösungsmittelfreier Schmelzklebstoff auf Basis von Polyesterpolyurethanen, dadurch gekennzeichnet, daß die Polyesterpolyurethane

(i) bei 20 °C in Methylethylketon nicht zu einer 15 %-igen Lösung gelöst werden können,

(ii) durch Umsetzung von a) organischen Diisocyanaten mit b) einer Mischung aus Polyesterdiolen, 1 bis 4 Mol pro Mol Polyesterdiol an niedermolekularen, aliphatischen Diolen als Kettenverlängerungsmittel, 0,025 bis 0,3 Mol pro Mol Polyesterdiol an Dimethylolpropionsäure und 0,025 bis 0,2 Mol pro Mol Polyesterdiol an Sulfonatdiolen unter Einhaltung eines NCO/OH-Aquivalentverhältnisses von 0,9 : 1 bis 1,05 : 1 hergestellt verhältnisses von 0,9 : 1 bis 1,05 : 1 hergestellt worden sind, wobei bei Verwendung von niedrigen Menger an niedermolekularen Diolen innerhalb des genannten Bereichs keine Diolgemische verwendet werden,

(iii) von 0,01 bis 1 Gew.-% an eingebauten Carboxylgruppen

(iv) von 0,1 bis 10 Milliäquivalenten pro 100 g Feststoff an eingebauten Sulfonatgruppen und

(v) von 4 bis 20 Gew.-% an Urethangruppen enthalten.

2. Schmelzklebstoff nach Anspruch 1, dadurch gekennzeichnet, daß er zusätzlich Carboxyl- und Sulfonatgruppen-freie Polyesterpolyurethane enthält, die durch Umsetzung von organischen Diisocyanaten mit difunktionellen, alkoholische Hydroxylgruppen aufweisenden Polyesterpolyolen und niedermolekularen Diolen als Kettenverlängerungsmittel unter Einhaltung eines NCO/OH-Aquivalentverhältnisses von 0,9 : 1 bis 1,05 : 1 erhältlich sind, wobei das molare Verhältnis der eingesetzten Polyesterpolyole zum eingesetzten Kettenverlängerungsmittel 1 : 0,2 bis 1 : 1,5 beträgt, und wobei das Gewichtsverhältnis von Carboxyl- und Sulfonatgruppen enthaltenden Polyesterpolyurethanen zu Carboxyl- und Sulfonatgruppen-freien Polyesterpolyurethanen 10 : 1 bis 1 : 10 beträgt.

3. Schmelzklebstoff nach Anspruch 1 und 2, dadurch gekennzeichnet, daß er in Form einer Folie vorliegt.

4. Schmelzklebstoffnach Anspruch 1 bis 3, dadurch gekennzeichnet, daß er in Form einer in situ-Beschichtung auf einem Substrat vorliegt.

5. Verwendung der Schmelzklebstoffe gemäß Anspruch 1 bis 4 zur Herstellung von Verbundstrukturen.

6. Verwendung nach Anspruch 5 zur Herstellung von Kaschierteilen für den Kraftfahrzeuginnenausbau durch Vakuumtiefziehen, Tiefziehpressen oder Vakuumtiefziehpressen.

**Claims**

1. Solvent-free hot-melt adhesive based on polyester polyurethanes, characterised in that the polyester polyurethanes

(i) cannot be dissolved in methyl ethyl ketone at 20 °C to form a 15% strength solution.

(ii) have been produced by reacting a) organic diisocyanates with b) a mixture of polyester diols, 1 to 4 moles, per mole of polyester diol, of low molecular weight, aliphatic diols as chainlengthening agents, 0.025 to 0.3 mole, per mole of polyester diol, of dimethylolpropionic acid and 0.025 to 0.2 mole, per mole of polyester diol, of sulphonate diols, while adhering to an NCO/OH equivalent ratio of 0.9 : 1 to 1.05 : 1, diol mixtures not being used when low amounts of low molecular weight diols are used within the range mentioned,

(iii) and contain 0.01 to 1 % by weight of incorporated carboxyl groups,

(iv) 0.1 to 10 milliequivalents, per 100 g of solids, of incorporated sulphonate groups and

(v) 4 to 20 % by weight of urethane groups.

2. Hot-melt adhesive according to Claim 1, characterised in that it additionally contains polyester polyurethanes which are free of carboxyl and sulphonate groups and can be obtained by reacting organic diisocyanates with difunctional polyester polyols containing alcoholic hydroxyl groups and low molecular weight diols as chain-lengthening agents, while adhering to an NCO/OH equivalent ratio of 0.9 : 1, to 1.05 : 1, the molar ratio of the polyester polyols used to the chain-lengthening agent used being 1 : 0.2 to 1 : 1.5, and the weight ratio of polyester polyurethanes containing carboxyl and sulphonate groups to polyester polyurethanes free of carboxyl and sulphonate groups being 10 : 1 to 1 : 10.

3. Hot-melt adhesive according to Claim 1 and 2, characterised in that it is present in the form of a film.

4. Hot-melt adhesive according to Claim 1 to 3, characterised in that it is present in the form of an in situ coating on a substrate.

5. Use of the hot-melt adhesives according to Claim 1 to 4 for the production of composite structures.

6. Use according to Claim 5 for the production of laminated parts for the interior finishing of motor vehicles by vacuum deep drawing, deep draw forming or vacuum deep draw forming.

**Revendications**

1. Une colle thermofusible sans solvants à base de polyester-polyuréthannes, caractérisée en ce que les polyester-polyuréthannes

i) ne peuvent pas être dissous à 20 °C dans de la méthyléthylcétone en une solution à 15 %

iii) qu'ils ont été préparés par réaction a) de diisocyanates organiques avec b) un mélange de polyester diols, de 1 à 4 moles par mole de polyesterdiol de diols aliphatiques de bas poids moléculaire comme allongeurs de chaîne, de 0.025 à 0.3 mole par mole de polyesterdiol d'acide diméthylolpropionique et de 0,025 à 0.2 mole, par mole de polyesterdiol, de sulfonatediols, en maintenant un rapport d'équivalents NCO/OH de 0.9 : 1 à 1.05 : 1, auquel cas aucun mélange de diols n'est utilisé lors de l'emploi de faibles quantités de diols de bas poids moléculaire dans les limites de la gamme citée,

iii) qu'ils renferment 0,01 à 1 % en poids de groupes carboxyles incorporés,

iv) 0,0 à 10 milliéquivalents pour 100 g de matière solide de groupes sulfonates incorporés et

v) 4 à 20 % en poids de groupes uréthanne.

2. Colle thermofusible selon la revendication 1, caractérisée en ce qu'elle contient en outre des polyester-polyuréthannes dépourvus de groupes carboxyles et sulfonates qui sont obtenus par réaction de diisocyanates organiques avec des polyesterpolyols difonctionnels dotés de groupes hydroxyles alcooliques et des diols de bas poids moléculaire en tant qu'allongeurs de chaîne, en respectant un rapport d'équivalents NCO/OH de 0,9 : 1 à 1.05 : 1, moyennant quoi le rapport molaire des polyesterpolyols mis en oeuvre aux allongeurs de chaîne employés s'étend de 1 : 0.2 à 1 : 1.5 et le rapport pondéral des polyester-polyuréthannes porteurs de groupes carboxyles et sulfonates aux polyester-polyuréthannes dépourvus de groupes carboxyles et sulfonates s'étend de 10 : 1 à 1 : 10.

3. Colle thermofusible selon les revendications 1 et 2, caractérisée en ce qu'elle se présente sous forme d'une feuille.

4. Colle thermofusible selon les revendications 1 à 3, caractérisée en ce qu'elle se présente sous forme d'un revêtement in situ sur un support.

5. Utilisation des colles thermofusibles selon les revendications 1 à 4 pour l'élaboration de structures composites.

6. Utilisation selon la revendication 5 pour la fabrication d'éléments contrecollés pour la finition intérieure des véhicules automobiles par formage sous vide, emboutissage par poinçon ou emboutissage sous vide et avec poinçon.